# EUROPÄISCHE PATENTANMELDUNG

(11) **EP 3 835 722 A1**
(43) Veröffentlichungstag der Anmeldung: **16.06.2021**
(21) Anmeldenummer: 19216182.6
(22) Anmeldetag: 13.12.2019
(51) Int. Cl.: G01C 15/00, G01S 7/481

(54) **EINSPIEGELUNGSVORRICHTUNG**

(71) Anmelder: Leica Geosystems AG, 9435 Heerbrugg (CH)
(72) Erfinder: BÖSCH, Thomas, A-6890 Lustenau (AT); MÜLLER, Josef, CH-9413 Oberegg (CH)
(74) Vertreter: Kaminski Harmann

(57) **Zusammenfassung**

Die Erfindung betrifft eine Vorrichtung zur Einspiegelung eines auf ein Zielobjekt projizierbaren Messlichtstrahls, aufweisend eine lichtbrechende Komponente (7,13,15) mit einer optischen Achse und mindestens zwei Spiegel (2,3,16) zum Umlenken des Messlichtstrahls und einen optischen Gesamtkörper (14,15,27) aus mindestens einem optisch wirksamen Material, wobei der optische Gesamtkörper (14,15,27) so beschaffen ist, dass die mindestens zwei Spiegel (2,3,16) innerhalb oder aber am Rande des optischen Gesamtkörpers (14,15,27) derart angebracht sind, dass der in den optischen Gesamtkörper (14,15,27) einfallende Messlichtstrahl beim Austritt aus dem optischen Gesamtkörper (14,15,27) so parallel versetzt zum einfallenden Messlichtstrahl (5) ist, dass der austretende Messlichtstrahl (6) auf der optischen Achse der lichtbrechenden Komponente (7,13,15) der Vorrichtung liegt und in dieser Form auf das Zielobjekt projiziert wird.

## Beschreibung

Die Erfindung betrifft eine Vorrichtung zur Einspiegelung eines Messlichtstrahls nach Anspruch 1.

Zum Vermessen von Zielpunkten sind seit der Antike zahlreiche Vermessungsgeräte bekannt. Als räumliche Standarddaten werden dabei Entfernung und Richtung bzw. Winkel von einem Messgerät zum zu vermessenden Zielpunkt aufgenommen sowie insbesondere die absolute Position des Messgerätes nebst eventuell vorhandenen Bezugspunkten erfasst. Typische Zielpunkte sind dabei Kirchtürme, Messlatten, Retroreflektoren oder markante Punkte in Innenräumen.

Allgemein bekannte Beispiele für solche Vermessungsgeräte stellen Theodolit, Tachymeter und Totalstation (die auch als elektronischer Tachymeter oder Computer-Tachymeter bezeichnet wird) dar. Beispielsweise ist eine geodätische Messvorrichtung des Standes der Technik in der Veröffentlichungsschrift EP 1 686 350 A1 beschrieben, wobei das geodätische Vermessungsgerät hier nur als Beispiel dient. Derartige Geräte verfügen über elektrosensorische Winkel- und Distanzmessfunktionen, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung ggf. noch mit einem äußeren Bezugssystem verknüpft werden.

Moderne Totalstationen verfügen über Mikroprozessoren zur digitalen Weiterverarbeitung und Speicherung erfasster Messdaten. Die Geräte weisen in der Regel eine kompakte und integrierte Bauweise auf, wobei meist koaxiale Distanzmesselemente sowie Rechen-, Steuer- und Speichereinheiten in einem Gerät vorhanden sind. Abhängig von der Ausbaustufe der Totalstation können zudem eine Motorisierung der Anziel- bzw. Visiereinrichtung sowie Mittel zur automatischen Zielsuche und -verfolgung integriert sein. Als Mensch-Maschine-Schnittstelle kann die Totalstation eine elektronische Anzeige-Steuereinheit - im Allgemeinen eine Mikroprozessor-Recheneinheit mit elektronischen Datenspeichermitteln - mit Display und Eingabemitteln, z. B. einer Tastatur, aufweisen. Der Anzeige-Steuereinheit werden die elektrosensorisch erfassten Messdaten zugeführt, sodass die Position des Zielpunkts durch die Anzeige-Steuereinheit ermittelbar, optisch anzeigbar und speicherbar ist. Aus dem Stand der Technik bekannte Totalstationen können weiterhin über eine Funkdatenschnittstelle verfügen zum Aufbau einer Funkverbindung zu externen Peripheriekomponenten wie z. B. zu einem handhaltbaren Datenerfassungsgerät, welches insbesondere als Datenlogger oder Feldrechner ausgebildet sein kann.

Zum Anvisieren bzw. Anzielen des zu vermessenden Zielpunkts weisen gattungsgemässe Vermessungsgeräte ein Zielfernrohr, wie z. B. ein optisches Teleskop, als Visiereinrichtung auf. Das Zielfernrohr ist im Allgemeinen um eine vertikale Stehachse und um eine horizontale Kippachse relativ zu einer Basis des Messgeräts drehbar, sodass das Fernrohr durch Schwenken und Kippen auf den zu vermessenden Punkt ausgerichtet werden kann. Moderne Geräte können additiv zum optischen Sichtkanal eine in das Zielfernrohr integrierte und beispielsweise koaxial oder parallel ausgerichtete Kamera zur Erfassung eines Bildes aufweisen, wobei das erfasste Bild insbesondere als Live-Bild auf dem Display der Anzeige-Steuereinheit und/oder auf einem Display des zur Fernsteuerung verwendeten Peripheriegeräts - wie z. B. des Datenloggers - dargestellt werden kann. Die Optik der Visiereinrichtung kann dabei einen manuellen Fokus - beispielsweise eine Stellschraube zur Veränderung der Position einer Fokussieroptik - aufweisen oder über einen Autofokus verfügen, wobei das Verändern der Fokusposition z. B. durch Servomotoren erfolgt. Automatische Fokussiereinrichtungen für Zielfernrohre beispielsweise geodätischer Geräte sind z. B. aus den Dokumenten DE 19710722, DE 19926706 oder DE 19949580 bekannt.

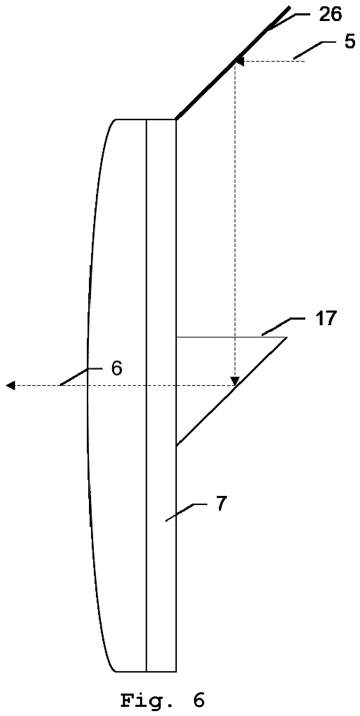

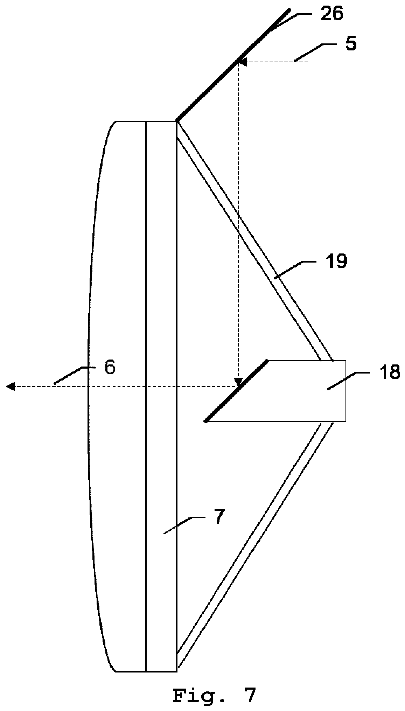

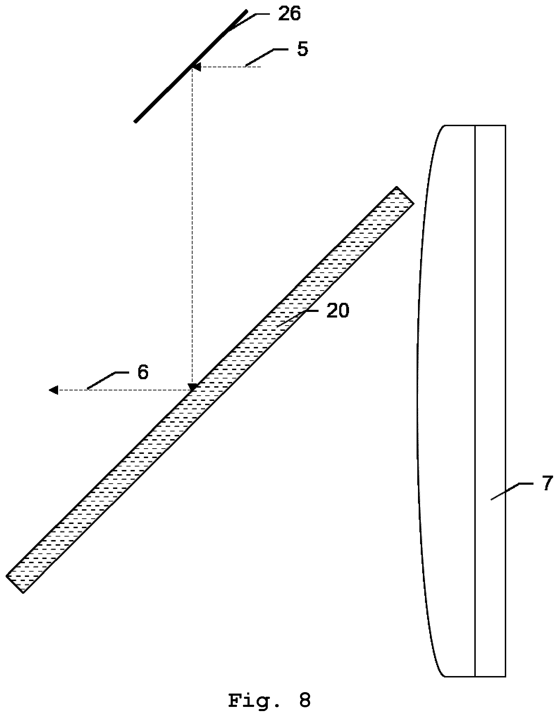

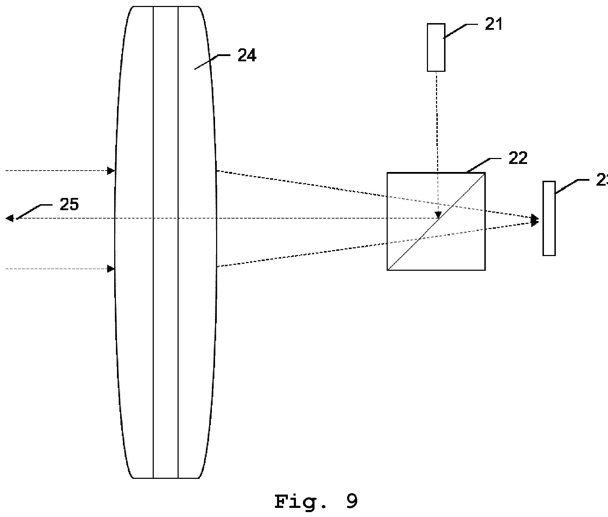

Die präzise opto-elektronische Vermessung eines entfernten Objekts bedarf häufig einer zusätzlichen Beleuchtungsquelle, die einen Messlichtstrahl erzeugt, mit dem das zu vermessende Objekt beleuchtet wird. Idealerweise ist der das zu vermessende Objekt beleuchtende Messlichtstrahl dabei kollinear zur optischen Achse des z.B. im Messteleskop verwendeten Objektivs, um die Entstehung von Parallaxen zu minimieren. Um eine möglichst optimale Ausnutzung z.B. eines Messteleskops zu erzielen, wird dann im Regelfall gefordert, dass die Einspiegelungsvorrichtung um die optische Achse der lichtbrechenden Komponenten des optischen Systems herum positioniert ist, so dass der eingespiegelte Messlichtstrahl auf der optischen Achse liegt. Kollineare Lösungen nach dem Stand der Technik werden in den Figuren 6-9 aufgezeigt. Ein Nachteil der in Figur 6 skizzierten Lösung ist dabei die fehlende mechanische Stabilität der Anordnung im Schockfall, sowie ein auftretender Zentrumsschatten in einem Bildsensor, welcher hinter der in Figur 6 gezeigten Anordnung positioniert wird. Ein solcher Zentrumsschatten verhindert dann die Vermessung eines Objekts, welches sich im Nahfeld des optischen Systems befindet. Die in Figur 7 gezeigte Lösung nach dem Stand der Technik weist ähnliche Nachteile wie die in Figur 6 dargestellte Lösung auf. Zuzüglich ist die Lösung auch empfindlich in Hinblick auf thermische Instabilitäten. Eine weitere Lösungsmöglichkeit nach dem Stand der Technik ist in Figur 8 dargestellt. Eine Teilerplatte wird zwecks Einspiegelung vor dem Objektiv z.B. eines Messteleskops positioniert. Nachteile dieser Lösung sind wiederum die fehlende Stabilität bei Temperaturänderungen sowie mechanische Instabilität. Weiterhin ist die in Figur 8 präsentierte Lösung nicht platzsparend und führt darüber hinaus zu einer vollständigen Intensitätseinbusse über die gesamte Eintrittspupille hinweg. Eine weitere Lösung nach dem Stand der Technik ist in Figur 9 dargestellt. Der prinzipielle Nachteil dieser Vorrichtung besteht darin, dass Mehrfachreflexe im Hauptobjektiv auftreten können.

Neben den hier erwähnten kollinearen Lösungen ist auch eine nichtkollineare Anordnung denkbar, bei der der Messstrahl, welcher das Messobjekt beleuchtet, nicht parallel zur optischen Achse des Objektivs z.B. eines Messteleskops ist. Nichtkollineare Beleuchtungen des Messpunkts führen im Allgemeinen zur Entstehung von Parallaxen, welche dann korrigiert werden müssen.

Die Aufgabe, eine verbesserte Einspiegelungsvorrichtung bereitzustellen, wird durch die Verwirklichung der kennzeichnenden Merkmale des unabhängigen Anspruchs gelöst. Merkmale, die die Erfindung in alternativer oder vorteilhafter Weise weiterbilden, sind den abhängigen Patentansprüchen zu entnehmen.

Die Erfindung betrifft eine Vorrichtung zur Einspiegelung eines auf ein Zielobjekt projizierbaren Messlichtstrahls, aufweisend eine lichtbrechende Komponente mit einer optischen Achse und mindestens zwei Spiegel zum Umlenken des Messlichtstrahls und einen optischen Gesamtkörper aus mindestens einem optisch wirksamen Material, wobei der optische Gesamtkörper so beschaffen ist, dass die mindestens zwei Spiegel innerhalb oder aber am Rande des optischen Gesamtkörpers derart angebracht sind, dass der in den optischen Gesamtkörper einfallende Messlichtstrahl beim Austritt aus dem optischen Gesamtkörper so parallel versetzt zum einfallenden Messlichtstrahl ist, dass der austretende Messlichtstrahl auf der optischen Achse der lichtbrechenden Komponente der Vorrichtung liegt und in dieser Form auf das Zielobjekt projiziert wird.

In einer Ausführungsform liegt der optische Gesamtkörper als Verbund aus mindestens zwei optischen Körpern oder als Verbund aus mindestens einem optischen Körper und mindestens einem optischen Teilkörper vor, wobei die zwei der mindestens zwei Spiegel nur an den Randflächen von mindestens einem der optischen Körper angebracht sind. Die Spiegel sind an optischen Körpern angebracht, und nicht an optischen Teilkörpern.

In einer Ausführungsform ist der optische Gesamtkörper aus genau einem optischen Körper und genau einem optischen Teilkörper zusammengesetzt.

In einer Ausführungsform ist der optische Körper, welchen der optische Gesamtkörper aufweist, in planparalleler und prismatischer Form ausgeführt, und der optische Teilkörper liegt ebenfalls in planparalleler und prismatischer Form vor.

In einer Ausführungsform ist mindestens einer der mindestens zwei Spiegel als Teilerschicht verwirklicht, so dass im Zentrum eines Distanzsensors zur Detektion des vom Zielobjekt reflektierten Messlichtstrahls, der orthogonal zur optischen Achse der lichtbrechenden Komponente positioniert ist und dessen Sensormittelpunkt von der optischen Achse geschnitten wird, lediglich eine Teilabschattung vorliegt.

In einer Ausführungsform weist der optische Gesamtkörper die lichtbrechende Komponente auf, so dass sowohl der Messlichtstrahlversatz als auch eine optische Abbildung vom optischen Gesamtkörper durchgeführt werden.

In einer Ausführungsform wird die Teilerschicht so eingestellt, dass Nahfeldmessungen ermöglicht werden, insbesondere durch ein dichroitisches Filter als Teilerschicht.

In einer Ausführungsform wird die Teilerschicht so eingestellt, dass sie selektiv einen Teiler für die Wellenlänge der verwendeten Messlichtquelle, insbesondere für eine Laserquelle im nahen Infrarotbereich, darstellt, und für andere Wellenlängen durchlässig ist.

In einer Ausführungsform ist die lichtbrechende Komponente als diffraktives optisches Element ausgebildet, insbesondere zum Beispiel als Kompositreplikat auf Glas.

In einer Ausführungsform bilden zwei parallele Oberflächen, an denen zwei der mindestens zwei Spiegel angebracht sind, von dem mindestens einen ersten optischen Körper einen gleichen Winkel zur Einfallsrichtung des Messlichtstrahls, wobei der Winkel insbesondere 43 Grad beträgt.

Der Winkel zwischen den zwei der mindestens zwei Spiegeln und der Einfallsrichtung des Messlichtstrahls kann von der Orientierung des ersten optischen Körpers abhängen.

In einer Ausführungsform sind sowohl der optische Körper als auch der optische Teilkörper als Glaskörper ausgeführt, und/oder als Kunststoffkörper, insbesondere aus Polycarbonat oder Polymethylmethacrylat oder einem Cycloolefin-Copolymer oder einem Cycloolefin-Polymer bestehend, und/oder als Keramikkörper, insbesondere aus Saphir oder Alon bestehend.

Die Erfindung betrifft weiterhin ein Koordinatenmessgerät, welches eine Vorrichtung nach Anspruch 1 aufweist, die zur Einspiegelung eines Messlichtstrahls verwendet werden kann.

Die Erfindung betrifft weiterhin ein Koordinatenmessgerät, welches eine Vorrichtung nach Anspruch 7 aufweist, so dass mit Hilfe des Koordinatenmessgeräts Vermessungen im Nahfeldbereich durchgeführt werden können.

Die Erfindung betrifft weiterhin ein Koordinatenmessgerät, wobei das Koordinatenmessgerät als Theodolit, Tachymeter oder Totalstation ausgeführt ist.

Die erfindungsgemässe Vorrichtung wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: eine Ausführungsform einer erfindungsgemässen Vorrichtung zur Einspiegelung eines Messlichtstrahls;
- Fig. 2: eine Ausführungsform einer erfindungsgemässen Vorrichtung zur Einspiegelung eines Messlichtstrahls, eine separate lichtbrechende Komponente aufweisend;
- Fig. 3: eine Ausführungsform einer erfindungsgemässen Vorrichtung zur Einspiegelung eines Messlichtstrahls, wobei die erfindungsgemässe Vorrichtung in einem Messteleskop angebracht ist;
- Fig. 4: eine Ausführungsform entsprechend Fig. 3, wobei die Anordnung von vorne betrachtet wird;
- Fig. 5: weitere Ausführungsformen einer erfindungsgemässen Vorrichtung zur Einspiegelung eines Messlichtstrahls;
- Fig. 6: Ausführungsform zur Einspiegelung eines Messlichtstrahls nach dem Stand der Technik, ein auf einer lichtbrechenden Komponente angebrachtes Prisma zur Einspiegelung verwendend;
- Fig. 7: Ausführungsform zur Einspiegelung eines Messlichtstrahls nach dem Stand der Technik, einen mechanisch an einer lichtbrechenden Komponente befestigten Strahlenträger zur Einspiegelung verwendend;
- Fig. 8: Ausführungsform zur Einspiegelung eines Messlichtstrahls nach dem Stand der Technik, eine vor einer lichtbrechenden Komponente angeordnete Teilerplatte zur Einspiegelung verwendend;
- Fig. 9: Ausführungsform zur Einspiegelung eines Messlichtstrahls nach dem Stand der Technik, einen Teilerwürfel zur Einspiegelung verwendend.

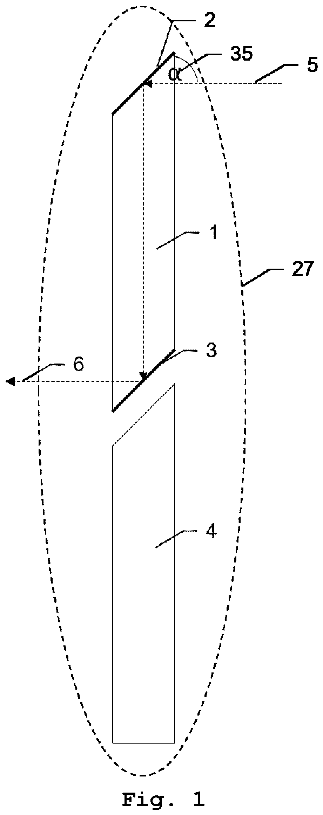

Figur 1 zeigt eine erste Ausführungsform einer erfindungsgemässen Vorrichtung zur Einspiegelung eines Messlichtstrahls in Form eines optischen Gesamtkörpers 27 aufweisend einen optischen Körper 1 und einen optischen Teilkörper 4. Die Ausführungsform weist einen planparallelen, prismatischen optischen Körper 1 auf, der mit einem Primärspiegel 2 und einem Sekundärspiegel 3 versehen ist. Ein einfallender Messlichtstrahl 5 wird durch die beiden Spiegel so umgelenkt, dass er parallel versetzt zum einfallenden Messlichtstrahl als ausfallender Messlichtstrahl 6 den optischen Körper verlässt. Die beiden Spiegel weisen einen gleichen Winkel α 35 zum ein- und ausfallenden Messlichtstrahl auf, der z.B. 43 Grad betragen kann. Ein optischer Teilkörper 4 ist so geformt, dass er mit dem optischen Körper 1 verbunden werden kann. Als mögliche Verbindungsmethode kann eine Verkittung gewählt werden. Im Regelfall ist der Brechungsindex des optischen Körpers 1 und des optischen Teilkörpers 4 im Wesentlichen übereinstimmend, so dass am Übergang zwischen dem optischen Körper 1 und dem optischen Teilkörper 4 keine oder nur eine sehr schwache Lichtbrechung auftritt. Beispielhaft sind die beiden Spiegel für den sichtbaren und nahen Infrarotbereich vorgesehen.

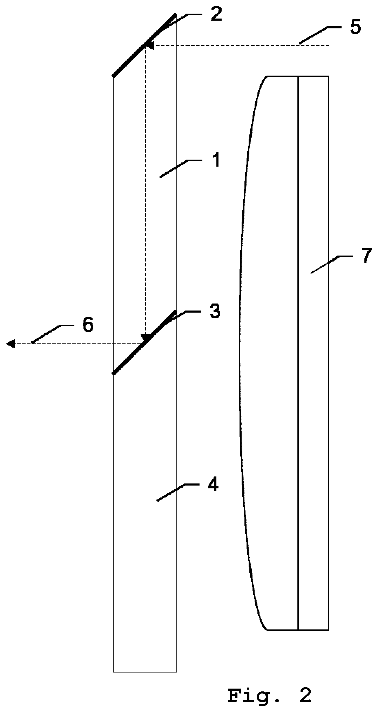

In Figur 2 ist neben dem optischen Gesamtkörper, der den optischen Körper 1 und den optischen Teilkörper 4 aufweist, und der nach der zu Figur 1 gegebenen Beschreibung aufgebaut ist, eine lichtbrechende Komponente 7 positioniert, welche hinter dem optischen Gesamtkörper angeordnet ist. Die lichtbrechende Komponente dient dabei als Objektiv z.B. eines Messteleskops und kann beliebig geformt sein.

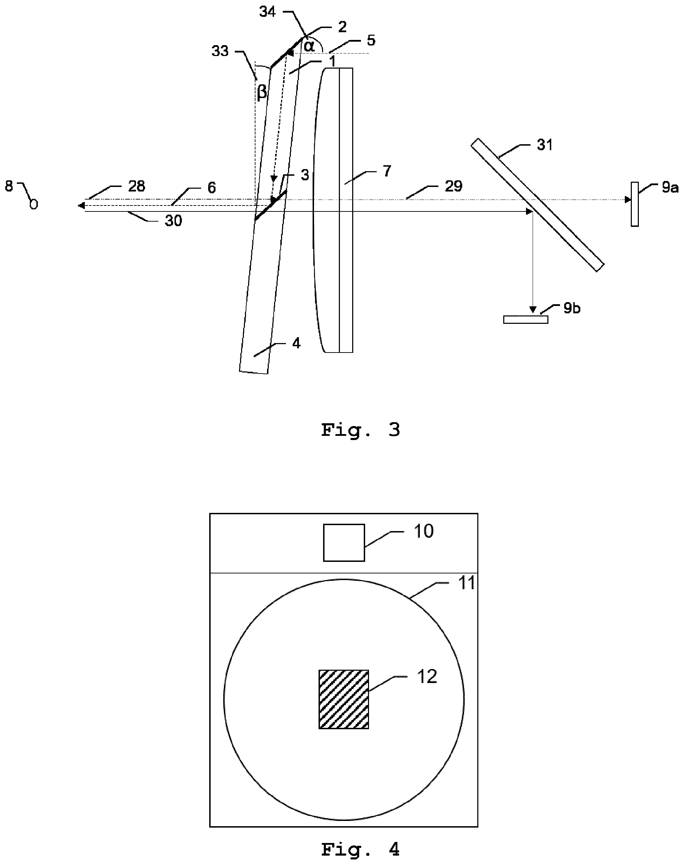

Figur 3 bettet die Anordnung nach Figur 2 in ein Messteleskop ein, wobei zusätzlich zu Figur 2 ein Messpunkt 8, ein Bildsensor 9b, ein Distanzsensor 9a, der insbesondere als APD oder SPAD Array ausgeführt ist, und eine wellenlängenabhängig-teiltransparente Teilerplatte 31 in Figur 3 enthalten sind. Der optische Gesamtkörper aus Figur 2 ist um einen Winkel β 33 gekippt, der insbesondere 2 Grad betragen kann. Die beiden Spiegel weisen einen gleichen Winkel α 34 zum ein- und ausfallenden Messlichtstrahl auf, wobei der Winkel α 34 insbesondere 43 Grad betragen kann. Die Winkel α 34 und β 33 sind über einen weiten Bereich einstellbar. Ein Kippen des optischen Gesamtkörpers aus Figur 2 um einen Winkel β 33 kann zur Vermeidung von ungewollten Reflexen in Richtung der lichtbrechenden Komponente 7 dienen. Die Anordnung ist weiterhin robust in Hinblick auf Fertigungsungenauigkeiten, da Schwankungen in α 34 und β 33 keinen wesentlichen Einfluss auf den Einspiegelungsvorgang haben. Das Messteleskop kann Bestandteil eines Koordinatenmessgeräts sein. Der ausfallende Messlichtstrahl 6, welcher in Richtung eines Messpunktes 8 zeigt, wird von diesem reflektiert. Die reflektierten Lichtstrahlen 28 des Messlichtstrahls werden sodann teilweise durch den Sekundärspiegel 3, der als Teilerschicht für die Wellenlänge des Messlichtstrahls, welche im nahen Infrarotbereich liegt, ausgebildet ist und für mit dem menschlichen Auge sichtbares Licht durchlässig ist, durchgelassen, woraufhin der reflektierte Messlichtstrahl 29, welcher durch den Sekundärspiegel 3 abgeschwächt ist, die wellenlängenabhängig-teiltransparente Teilerplatte 31 transmittiert und von einem Distanzsensor 9a, der insbesondere als Avalanche-Photodiode ausgeführt ist und zur Distanzmessung vorgesehen ist, erfasst wird. Vom Messpunkt 8 ausgehendes Licht 30 im vom menschlichen Auge sichtbaren Wellenlängenbereich wird vollständig vom Sekundärspiegel 3 durchgelassen und daraufhin von der wellenlängenabhängig-teiltransparenten Teilerplatte 31 auf einem Bildsensor 9b umgeleitet. Der Distanzsensor 9a und der Bildsensor 9b stellen damit eine Schnittstelle zu einer weitergehenden elektronischen Verarbeitung der erfassten Bilder dar.

Ein Vorteil der in Figur 3 gezeigten Anordnung ist die mechanische und thermische Stabilität der Einspiegelungsvorrichtung. Mechanische Stabilität wird insbesondere dadurch erreicht, dass die beiden zur Umlenkung eingesetzten Spiegel zwischen oder auf massivem Glas oder anderem optisch wirksamen Material eingebettet sind, so dass die Vorrichtung robust gegenüber einem mechanischen Schock ist. Da alle Materialien darüber hinaus ähnliches Verhalten bei thermischen Veränderungen aufweisen können, kann die Empfindlichkeit der Einspiegelungsvorrichtung auf solche Änderungen minimiert werden. Die kompakte Bauweise der Einspiegelungsvorrichtung minimiert auch die Anzahl Flächen, die verschmutzt werden können. Schliesslich führt die in Figur 3 gezeigte Einspiegelungsvorrichtung auch nicht zur Entstehung von Parallaxen, da der ausfallende Messlichtstrahl 6 kollinear zur optischen Achse der lichtbrechenden Komponente 7 ist. Kleine translatorische Bewegungen der Einspiegelungsvorrichtung entlang der optischen Achse der lichtbrechenden Komponente 7 und orthogonal zu ebendieser Achse sowie kleine Rotationsbewegungen um ebendiese Achse haben keinen Einfluss auf den ausfallenden Messlichtstrahl 6.

Figur 4 betrachtet die Anordnung aus Figur 3 von vorne, d.h. vom Messpunkt 8 aus Richtung Distanzsensor 9a schauend. Figur 4 zeigt dabei den Ort des einfallenden Messlichtstrahls 10, die Eintrittspupille 11 des Messlichtstrahls nach Reflexion am Messpunkt 8 und den Bereich im Distanzsensor 9a, in dem Teilabschattung 12 vorliegt. Damit lediglich eine Teilabschattung für die in Figur 3 dargestellte Anordnung vorliegt, kann insbesondere der untere Spiegel 3 im optischen Körper 1 als Teilerschicht verwirklicht werden. Der untere Spiegel 3 kann beispielsweise eine Teilerschicht für Wellenlängen im nahen Infrarotbereich ausbilden und voll durchlässig für andere Wellenlängen sein. Mit Hilfe einer Verwirklichung des unteren Spiegels 3 als Teilerschicht ist es möglich, mit dem in Figur 3 gezeigten Messteleskop Nahfeldmessungen durchzuführen, da nun auch die zentralen Bereiche des Distanzsensors 9a beleuchtet werden. Eine Verwirklichung des unteren Spiegels 3 als Teilerschicht erlaubt weiterhin Messungen auf Retroflektoren hoher Güte, welche am Messpunkt 8 angebracht sind, ohne dass der Messlichtstrahl aufgeweitet werden muss.

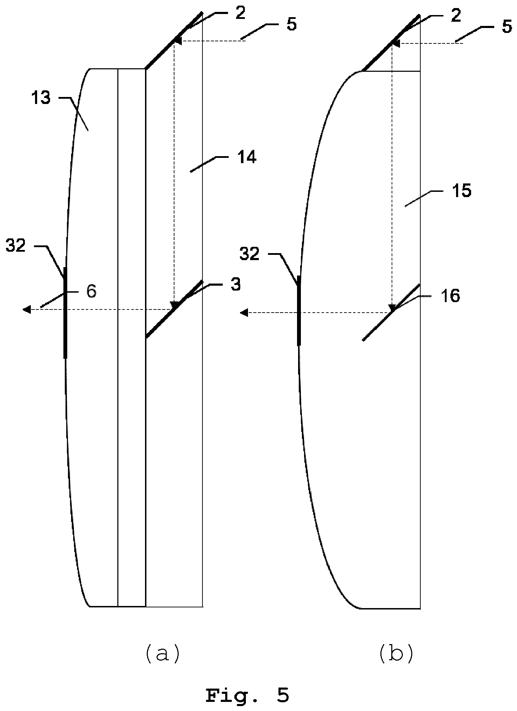

Figur 5 zeigt alternative Ausführungsformen einer erfindungsgemässen Vorrichtung. Figur 5a zeigt eine Anordnung, bei der die lichtbrechende Komponente 13 mit dem optischen Gesamtkörper 14 fest verbunden ist. Ein Vorteil dieser Anordnung ist eine erhöhte mechanische Stabilität. Die lichtbrechende Komponente kann insbesondere kleiner sein als der optische Gesamtkörper. Die lichtbrechende Komponente 13 ist auf der den optischen Gesamtkörper 14 nicht berührenden Oberfläche um die optische Achse herum lokal plan 32.

Figur 5b wiederum zeigt eine Ausführungsform, bei der der optische Gesamtkörper 15 so geformt ist, dass er gleichzeitig zur Einspiegelung eines Messlichtstrahls 5 und zur optischen Abbildung verwendet werden kann. Der optische Gesamtkörper 15 wird damit sowohl zur Einspiegelung als auch als lichtbrechende Komponente verwendet. Der untere Spiegel 16 kann sowohl wie dargestellt ausgeführt sein, oder aber alternativ bis zur gekrümmten Oberfläche fortgeführt sein. Vorteile der in Figur 5b gezeigten Anordnung bestehen darin, dass nur ein Objekt für die Einspiegelung und die optische Abbildung vonnöten ist und dass die Verwirklichung in der gezeigten Form über eine hohe mechanische Stabilität verfügt. Der optische Gesamtkörper 15 ist an seinem Scheitelpunkt lokal plan 32.

Figur 6 zeigt eine Ausführungsform zur Einspiegelung eines Messlichtstrahls 5 nach dem Stand der Technik. Über einen Spiegel 26 wird der einfallende Messlichtstrahl 5 in Richtung eines Prismas 17 umgelenkt, wobei das Prisma 17 auf einer lichtbrechenden Komponente 7 angebracht ist. Das Prisma 17 wird dabei zur Einspiegelung verwendet und lenkt den einfallenden Strahl so um, dass er kollinear zur optischen Achse der lichtbrechenden Komponente 7 ist.

Figur 7 zeigt eine weitere Ausführungsform zur Einspiegelung eines Messlichtstrahls 5 nach dem Stand der Technik. Über einen Spiegel 26 wird der einfallende Messlichtstrahl 5 in Richtung eines Spiegelträgers 18 umgelenkt. Der Spiegelträger 18 wird über eine Mechanik 19 mit der lichtbrechenden Komponente 7 in Bezug gebracht. Ein vom Spiegel 26 umgelenkter einfallender Messlichtstrahl 5 wird vom Spiegelträger 18 in Richtung der optischen Achse der lichtbrechenden Komponente 7 umgelenkt.

Figur 8 zeigt eine weitere Ausführungsform zur Einspiegelung eines Messlichtstrahls 5 nach dem Stand der Technik. Über einen Spiegel 26 wird der einfallende Messlichtstrahl 5 in Richtung einer Teilerplatte 20 umgelenkt. Die Teilerplatte 20 wird so vor einer lichtbrechenden Komponente 7 positioniert, dass der von der Teilerplatte 20 reflektierte Messlichtstrahl auf der optischen Achse der lichtbrechenden Komponente 7 liegt.

Figur 9 zeigt eine weitere Ausführungsform zur Einspiegelung eines Messlichtstrahls nach dem Stand der Technik. Eine einen Messlichtstrahl erzeugende Quelle 21 projiziert den Messlichtstrahl in Richtung eines Teilerwürfels 22, welcher den Messlichtstrahl teilweise so umlenkt, dass der Messlichtstrahl auf der optischen Achse eines Hauptobjektivs 24 liegt. Der ausfallende Messlichtstrahl 25 wird dann auf einen Messpunkt gelenkt. Ein Bildsensor 23 zeichnet dann die vom Zielobjekt reflektierten und vom Hauptobjektiv 24 gebündelten Lichtstrahlen auf.

Es versteht sich, dass diese dargestellten Figuren nur mögliche Ausführungsbeispiele schematisch darstellen. Die verschiedenen Ansätze können ebenso miteinander sowie mit Verfahren und Geräten des Standes der Technik kombiniert werden.

## Patentansprüche

1. Vorrichtung zur Einspiegelung eines auf ein Zielobjekt projizierbaren Messlichtstrahls, aufweisend
• eine lichtbrechende Komponente (7,13,15) mit einer optischen Achse und
• mindestens zwei Spiegel (2,3,16) zum Umlenken des Messlichtstrahls und
• einen optischen Gesamtkörper (14, 15, 27) aus mindestens einem optisch wirksamen Material,
**dadurch gekennzeichnet, dass**
der optische Gesamtkörper (14, 15, 27) so beschaffen ist, dass die mindestens zwei Spiegel (2, 3, 16) innerhalb oder aber am Rande des optischen Gesamtkörpers (14, 15, 27) derart angebracht sind, dass der in den optischen Gesamtkörper (14, 15, 27) einfallende Messlichtstrahl beim Austritt aus dem optischen Gesamtkörper (14, 15, 27) so parallel versetzt zum einfallenden Messlichtstrahl (5) ist, dass der austretende Messlichtstrahl (6) auf der optischen Achse der lichtbrechenden Komponente (7, 13, 15) der Vorrichtung liegt und in dieser Form auf das Zielobjekt projiziert wird.

2. Vorrichtung nach Anspruch 1,
**dadurch gekennzeichnet, dass**
der optische Gesamtkörper (27) als Verbund aus mindestens zwei optischen Körpern oder als Verbund aus mindestens einem optischen Körper (1) und mindestens einem optischen Teilkörper (4) vorliegt, wobei die zwei der mindestens zwei Spiegel (2, 3) nur an den Randflächen von mindestens einem der optischen Körper angebracht sind.

3. Vorrichtung nach Anspruch 2,
**dadurch gekennzeichnet, dass**
der optische Gesamtkörper (27) aus genau einem optischen Körper (1) und genau einem optischen Teilkörper (4) zusammengesetzt ist.

4. Vorrichtung nach Anspruch 3,
**dadurch gekennzeichnet, dass**
der optische Körper (1), welchen der optische Gesamtkörper (27) aufweist, in planparalleler und prismatischer Form ausgeführt ist, und der optische Teilkörper ebenfalls in planparalleler und prismatischer Form vorliegt.

5. Vorrichtung nach einem der vorherigen Ansprüche,
**dadurch gekennzeichnet, dass**
mindestens einer der mindestens zwei Spiegel (3, 16) als Teilerschicht verwirklicht ist, so dass im Zentrum eines Distanzsensors (9a) zur Detektion des vom Zielobjekt reflektierten Messlichtstrahls, der orthogonal zur optischen Achse der lichtbrechenden Komponente (7, 13, 15) positioniert ist und dessen Sensormittelpunkt von der optischen Achse geschnitten wird, lediglich eine Teilabschattung (12) vorliegt.

6. Vorrichtung nach einem der vorherigen Ansprüche,
**dadurch gekennzeichnet, dass**
der optische Gesamtkörper (15) die lichtbrechende Komponente aufweist, so dass sowohl der Messlichtstrahlversatz als auch eine optische Abbildung vom optischen Gesamtkörper durchgeführt werden.

7. Vorrichtung nach Anspruch 5,
**dadurch gekennzeichnet, dass**
die Teilerschicht so eingestellt wird, dass Nahfeldmessungen ermöglicht werden, insbesondere durch ein dichroitisches Filter als Teilerschicht.

8. Vorrichtung nach Anspruch 5 oder 7,
**dadurch gekennzeichnet, dass**
die Teilerschicht so eingestellt wird, dass sie selektiv einen Teiler für die Wellenlänge der verwendeten Messlichtquelle, insbesondere für eine Laserquelle im nahen Infrarotbereich, darstellt, und bei anderen Wellenlängen durchlässig ist.

9. Vorrichtung nach einem der vorherigen Ansprüche,
**dadurch gekennzeichnet, dass**
die lichtbrechende Komponente (7, 13) als diffraktives optisches Element ausgebildet ist, insbesondere als Kompositreplikat auf Glas.

10. Vorrichtung nach einem der vorherigen Ansprüche,
**dadurch gekennzeichnet, dass**
zwei parallele Oberflächen, an denen zwei der mindestens zwei Spiegel angebracht sind, von dem mindestens einen ersten optischen Körper einen gleichen Winkel (34, 35) zur Einfallsrichtung des Messlichtstrahls bilden, wobei der Winkel insbesondere 43 Grad beträgt.

11. Vorrichtung nach einem der vorherigen Ansprüche,
**dadurch gekennzeichnet, dass**
sowohl der optische Körper als auch der optische Teilkörper als Glaskörper, und/oder als Kunststoffkörper, insbesondere aus Polycarbonat oder Polymethylmethacrylat oder einem Cycloolefin-Copolymer oder einem Cycloolefin-Polymer bestehend, und/oder als Keramikkörper, insbesondere aus Saphir oder Alon bestehend, ausgeführt sind.

12. Koordinatenmessgerät,
**dadurch gekennzeichnet, dass**
es eine Vorrichtung nach Anspruch 1 aufweist, die zur Einspiegelung eines Messlichtstrahls verwendet werden kann.

13. Koordinatenmessgerät nach Anspruch 12,
**dadurch gekennzeichnet, dass**
es eine Vorrichtung nach Anspruch 7 aufweist, so dass mit Hilfe des Koordinatenmessgeräts Vermessungen im Nahfeldbereich durchgeführt werden können.

14. Koordinatenmessgerät nach Anspruch 12 oder 13,
**dadurch gekennzeichnet, dass**
das Koordinatenmessgerät als Theodolit, Tachymeter oder Totalstation ausgeführt ist.
